# EUROPEAN PATENT SPECIFICATION

(11) **EP 0 775 715 B1**
(45) Date of publication and mention of the grant of the patent: **14.02.2001**
(21) Application number: 96308445.4
(22) Date of filing: 21.11.1996
(51) Int. Cl.: C08G 59/68, C09J 163/00

(54) **Adhesive composition and adhesive sheet**
Klebstoffzusammensetzung und Klebeschicht
Composition adhésive et feuille adhésive

(30) Priority: 22.11.1995 JP 30459795
(43) Date of publication of application: 28.05.1997
(73) Proprietor: LINTEC Corporation, Tokyo (JP)
(72) Inventor: Senoo, Hideo, Saitama 351-01 (JP); Sugino, Takashi, Saitama 332 (JP); Murai, Shinji, Creare Toshiba Motoyawata 310, Chiba 272 (JP); Nakano, Yoshihiko, Koto-ku, Tokyo 136 (JP); Hayase, Shuji, Yokohama-shi, Kanagawa 230 (JP)
(74) Representative: Calamita, Roberto

(56) References cited:
- EP-A- 0 074 073
- EP-A- 0 157 508
- GB-A- 2 009 753
- US-A- 4 238 587

## Description

### FIELD OF THE INVENTION

The present invention relates to novel adhesive compositions and adhesive sheets using the same. More particularly, the invention relates to adhesive compositions which can remove bad influences caused by ions derived from curing agents and are suitably used particularly for adhesion bonding of electronic parts, and also relates to adhesive sheets using the same.

### BACKGROUND OF THE INVENTION

Epoxy adhesives have been conventionally widely used for adhering various parts. The epoxy adhesives comprise, as major components, low-molecular weight epoxy compounds generally referred to as "epoxy resins" and thermally active latent type epoxy resin curing agents which promote crosslinking reaction of the epoxy compounds.

The epoxy curing agents generally used are, for example, acid anhydrides, imidazole compounds and onium salts.

However, the imidazole compounds or the acid anhydrides easily cause gelation reaction in one-pack system, namely, a mixed system of an epoxy compound and an epoxy curing agent, and are poor in preservation stability. Moreover, most of the imidazole compounds are in the form of particles at room temperature and it is difficult to uniformly disperse them at temperatures at which they are not cured.

On the other hand, the onium salts do not have such processing drawbacks as described above, but ions structurally derived from the onium salts sometimes remain in the cured product. These remaining ions effect bad influences particularly on the qualities of electronic parts.

For this reason, the epoxy adhesives containing onium salts have not been employed so often in spite of the processing advantages.

US-A 4 238 587 discloses compositions comprising a cationically polymerizable organic material, such as an epoxy resin, a diaryliodonium salt and a copper chelate, and their use as adhesives. EP-A 0 074 073 discloses thermosetting epoxy resin compositions comprising an onium compound and a metal complex, and their use in coatings and potting resins. Neither of these documents, however, disclose or suggest the use of pressure-sensitive adhesive components in thermosetting adhesive compositions.

The present invention has been made under such circumstances as described above, and it is an object of the invention to reduce bad influences caused by ions remaining in the cured product when an onium salt is used as a curing agent of the epoxy adhesives.

The thermosetting pressure-sensitive adhesive composition according to the present invention comprises a thermosetting adhesive component (I) which comprises an epoxy compound (Ia), an onium salt for curing of epoxy resin (Ib) and a metal complex compound (Ic), and a pressure-sensitive adhesive component (II).

The thermosetting/energy ray-curing pressure-sensitive adhesive composition according to the present invention comprises a thermosetting adhesive component (I) which comprises an epoxy compound (Ia), an onium salt for curing of epoxy resin (Ib) and a metal complex compound (Ic), and an energy ray-curing pressure-sensitive adhesive component (II').

The adhesive sheet according to the present invention comprises a substrate and a pressure-sensitive adhesive layer which is provided on the substrate and comprises the thermosetting pressure-sensitive adhesive composition or the thermosetting/energy ray-curing pressure sensitive adhesive composition.

The adhesive compositions and the adhesive sheet according to the invention can be suitably used particularly for processing or adhering electronic parts.

### DETAILED DESCRIPTION OF THE INVENTION

The adhesive compositions and the adhesive sheet according to the invention will be described in detail hereinafter.

The first adhesive composition of the invention is thermosetting and pressure-sensitive, and contains an epoxy compound (Ia), an onium salt for curing of epoxy resin (Ib), a metal complex compound (Ic) and a pressure-sensitive adhesive component (II) as its essential components.

Although various epoxy compounds conventionally known are employable as the epoxy compound (Ia), epoxy compounds having a molecular weight of about 300 to 2,000 are preferable. Particularly, a blend of an epoxy compound having a molecular weight of 300 to 500, preferably 330 to 400, that is liquid in an ordinary state, and an epoxy compound having a molecular weight of 400 to 2,000, preferably 500 to 1,500, that is solid in an ordinary state, is preferably employed. The epoxy equivalent of the epoxy compound preferably used in the invention is usually in the range of 50 to 5,000 g/eq. Examples of such epoxy compounds include:
glycidyl ethers of phenols such as bisphenol A, bisphenol F, resorcinol, phenol novolak and cresol novolak;
glycidyl ethers of alcohols such as butanediol, polyethylene glycol and polypropylene glycol;
glycidyl ethers of carboxylic acids such as phthalic acid, isophthalic acid and tetrahydrophthalic acid;
glycidyl or alkylglycidyl epoxy compounds wherein active hydrogen bonded to a nitrogen atom in aniline isocyanurate or the like is replaced with a glycidyl group; and
alicyclic epoxides wherein epoxy is introduced by, for example, oxidizing a carbon-to-carbon double bond in the molecule, such as vinylcyclohexane diepoxide, 3,4-epoxycyclohexylmethyl-3,4-dicyclohexanecarboxylate and 2-(3,4-epoxy)cyclohexyl-5,5-spiro(3,4-epoxy)cyclohexane-m-dioxane.

Of these, bisphenol glycidyl type epoxy compounds, cresol novolak type epoxy compounds and phenol novolak type epoxy compounds are preferably used in the invention.

The epoxy compounds can be used singly or in combination of two or more kinds.

The onium salt for curing of epoxy resin (Ib) is a thermally active latent type epoxy resin curing agent. This curing agent does not react with epoxy resins at room temperature but is activated at temperatures higher than a certain temperature to react with epoxy resins.

Various onium compounds conventionally known are employable as the onium salt for curing of epoxy resin (Ib).

Examples of such onium compounds include:
ammonium compounds, such as trimethylbenzylammonium hexafluoroantimonate;
phosphonium compounds, such as triphenylbenzylphosphonium hexafluoroarsenate;
sulfonium compounds, such as 2-butenyl tetramethylene sulfonium hexafluoroantimonate and triphenylsulfonium hexafluoroarsenate; and
iodonium compounds, such as diphenyliodonium tetrafluoroborate.

Of the above compounds, particularly preferable onium slats are sulfonium compounds.

These onium salts can be used singly or in combination of two or more kinds.

The metal complex compound (Ic) employable in the invention is, for example, a complex compound wherein an alkoxy group, a phenoxy group, an acyloxy group, a β-diketonato group, an o-carbonylphenolato group or the like is bonded to an atom such as Ti, Al or Zr.

The alkoxy group preferably has 1 to 10 carbon atoms, and examples of such alkoxy groups include methoxy, ethoxy, n-propoxy, n-butoxy, sec-buttery, tert-butoxy, n-pentyloxy, n-hexyloxy and n-heptyloxy. Examples of the phenoxy groups include phenoxy, o-methylphenoxy, p-methoxyphenoxy, p-nitrophenoxy and 2,6-dimethylphenoxy. Examples of the acyloxy groups include ligands such as acetato, propionato, isopropionato, butylato, stearato, ethylacetoacetato, propylacetoacetato, butylacetoacetato, diethylmalonato and dipivaloylmethanato. Examples of the β-diketonato groups include ligands such as acetylacetonato, trifluoroacetylacetonato and hexafluoroacetylacetonato. Examples of the o-carbonylphenolato groups include salicylaldehydato.

Of the above metal complex compounds, most preferable are organoaluminum compounds, and examples thereof include
trismethoxyaluminum, trisethoxyaluminum,
trisisopropoxyaluminum, trisphenoxyaluminum,
tris(p-methylphenoxy)aluminum, isopropoxydiethoxyaluminum,
trisbutoxyaluminum, trisacetoxyaluminum,
trisstearatoaluminum, trisbutylatoaluminum,
trispropionatoaluminum, trisisopropionatoaluminum,
trisacetylacetonatoaluminum,
tristrifluoroacetylacetonatoaluminum,
trishexafluoroacetylacetonatoaluminum,
trisethylacetoacetatoaluminum,
trissalicylaldehydatoaluminum, trisdiethylmalonatoaluminum,
tripropylacetoacetatoaluminum,
trisbutylacetoacetatoaluminum,
trisdipivaloylmethanatoaluminum,
diacetylacetonatodipivaloylmethanatoaluminum,
bis(ethylacetoacetato)(acetylacetonato)aluminum and
diisopropoxy(ethylacetoacetato)aluminum.

These metal complex compounds can be used singly or in combination of two or more kinds.

By introducing the metal complex compound (Ic) into the epoxy adhesive composed of the epoxy compound (Ia) and the onium salt for curing of epoxy resin (Ib), bad influences caused by ions generated from the onium salt during the curing process can be reduced. The reason has not been exactly clarified yet, but it is presumed that the ions are trapped by the metal complex compound (Ic).

The thermosetting pressure-sensitive adhesive composition of the invention is used for adhering various parts, particularly it is used for adhering electronic parts because bad influences caused by the residual ions can be reduced. For example, in the preparation of a semiconductor apparatus by mounting an IC chip having a circuit on its front surface on a lead frame with the use of the thermosetting adhesive composition of the invention, a back surface of the IC chip is coated with the thermosetting adhesive composition, then the IC chip is mounted on the lead frame, and they are heated to adhere the IC chip to the lead frame.

As the pressure-sensitive adhesive component (II), various adhesives conventionally known, such as those of acrylic type, rubber type, silicone type and polyether type, are employable. Of these, acrylic adhesives are preferably employed from the viewpoint of ease of controlling adhesion properties.

Examples of the acrylic adhesives include (meth)acrylic ester copolymers composed of constituent units derived from (meth)acrylic ester monomers and (meth)acrylic acid derivatives.

The molecular weight of the acrylic adhesives is preferably not less than 100,000, particularly preferably 150,000 to 1,000,000, and the glass transition temperature thereof is usually not higher than 20 °C, preferably -70 to 0 °C. The acrylic adhesives have adhesion properties at ordinary temperature (23 °C).

Of such acrylic adhesives, a copolymer of (meth)acrylic acid or glycidyl (meth)acrylate and at least one kind of (meth)acrylic alkyl ester is particularly preferable. In this copolymer, the constituent units derived from the glycidyl (meth)acrylate are contained in amounts of usually 0 to 80 % by mol, preferably 5 to 50 % by mol. By introducing the glycidyl group, compatibility with the epoxy compound (Ia) can be improved, and besides Tg after curing process is increased to thereby improve heat resistance. Examples of the (meth)acrylic alkyl esters preferably used include methyl (meth)acrylate, ethyl (meth)acrylate and butyl (meth)acrylate. If a hydroxyl group-containing monomer such as hydroxyethyl acrylate is introduced, adherence with the adherend or adhesion properties can be easily controlled.

The pressure-sensitive adhesive components can be used singly or in combination of two or more kinds.

The first adhesive composition of the invention comprises the components (Ia) to (Ic) and the pressure-sensitive adhesive component (II) as its essential components, and the compounding ratio between those components is appropriately determined. However, the onium salt for curing of epoxy resin (Ib) is used in an amount of preferably 0.01 to 20 parts by weight, particularly preferably 0.05 to 10 parts by weight, based on 100 parts by weight of the epoxy compound (Ia); the metal complex compound (Ic) is used in an amount of preferably 0.01 to 20 parts by weight, particularly preferably 0.05 to 10 parts by weight, based on 100 parts by weight of the epoxy compound (Ia); and the pressure-sensitive adhesive component (II) is used in an amount of 5 to 300 parts by weight, particularly preferably 10 to 100 parts by weight, based on 100 parts by weight of the epoxy compound (Ia).

To the thermosetting pressure-sensitive adhesive composition of the invention, metallic powders having electrical conductivity, insulation fillers such as silica and flexible components for imparting toughness to the cured product can be added according to necessity, in addition to the above components (Ia) to (Ic) and (II).

The thermosetting pressure-sensitive adhesive composition of the invention can be prepared by mixing the above components in a conventional manner.

It is particularly preferable to use the second adhesive composition of the invention in the form of so-called "adhesive sheet".

That is, the first embodiment of the adhesive sheet of the invention comprises a substrate and a pressure-sensitive adhesive layer which is provided on the substrate and made of the thermosetting pressure-sensitive adhesive composition.

Examples of the substrates include transparent films such as polyethylene film, polypropylene film, polybutene film, polybutadiene film, polymethylpentene film, polyvinyl chloride film, vinyl chloride copolymer film, polyethylene terephthalate film, polybutylene terephthalate film, polyurethane film, ethylene/vinyl acetate copolymer film, ionomer resin film, ethylene/(meth)acrylic acid copolymer film, ethylene/(meth)acrylic ester copolymer film, polystyrene film and polycarbonate film. Also employable are their crosslinked films. Further, laminates of those films are also employable.

The substrate has a surface tension, on the side to be coated with the pressure-sensitive adhesive layer, of preferably not more than 40 dyne/cm, more preferably not more than 37 dyne/cm, particularly preferably not more than 35 dyne/cm. A substrate having such a low surface tension as mentioned above can be obtained by properly selecting a material or by applying a silicone resin or the like onto a surface of the substrate so as to effect a release treatment.

The substrate has a thickness of usually about 10 to 300 µm, preferably about 20 to 200 µm, particularly preferably about 50 to 150 µm. On the other hand, the pressure-sensitive adhesive layer has a thickness of usually about 5 to 100 µm, preferably about 10 to 75 µm, particularly preferably about 15 to 50 µm.

The adhesive sheet of the first embodiment according to the present invention can hold an adherend with sufficient adhesion strength, so that the adherend held thereon can be subjected to various processes such as cutting and abrading. After the desired process, the adherend is peeled from the sheet, and as a result the pressure-sensitive adhesive layer can be allowed to remain on the surface of the adherend. Therefore, the adherend can be adhered to another article, and besides the adherend can be firmly fixed thereto by heating because the thermosetting adhesive component contained in the pressure-sensitive adhesive layer is cured under heating.

The adhesive sheet is particularly preferably used for cutting a semiconductor wafer into IC chips and adhering the chips onto a lead frame. In more detail, a semiconductor wafer is adhered to the pressure-sensitive adhesive layer of the adhesive sheet and diced to give an IC chip on the adhesive sheet. The IC chip is peeled from the substrate while the pressure-sensitive adhesive layer is allowed to remain on the surface of the IC chip. Then, the IC chip is mounted on a lead frame through the pressure-sensitive adhesive layer and then heated, whereby adhesive force of the pressure-sensitive adhesive layer is developed to bond the IC chip and the lead frame together.

Next, the second adhesive composition according to the invention, i.e., thermosetting/energy ray-curing pressure-sensitive adhesive composition, is described.

The thermosetting/energy ray-curing pressure-sensitive adhesive composition comprises the thermosetting adhesive component (I), which comprises the above components (Ia) to (Ic), and an energy ray-curing pressure-sensitive adhesive component (II').

The energy ray-curing pressure-sensitive adhesive component (II') is a component which has sufficient tackiness before irradiation with energy rays such as ultraviolet rays and electron rays and which is cured by irradiation with energy rays to lose the tackiness. Various types of the energy ray-curing pressure-sensitive adhesive components are known, and these energy ray-curing pressure-sensitive adhesive components conventionally known can be employed in the invention without specific limitations. The energy ray-curing pressure-sensitive adhesive component is, for example, an adhesive composition composed of the aforesaid pressure-sensitive component (II), an energy ray-polymerizable low-molecular weight compound and optionally a photopolymerization initiator.

The energy ray-polymerizable low-molecular weight compound is a compound which is polymerized and cured when irradiated with energy rays such as ultraviolet rays and electron rays. This compound has at least one polymerizable double bond in the molecule and has a molecular weight of usually about 100 to 30,000, preferably about 300 to 10,000. As the energy ray-polymerizable low-molecular weight compounds, low-molecular weight compounds disclosed in, for example, Japanese Patent Laid-Open Publications No. 196956/1985 and No. 223139/1985 are widely employed. Examples of such compounds include acrylate compounds, such as trimethylolpropane triacrylate, tetramethylolmethane tetraacrylate, pentaerythritol triacrylate, dipentaerythritol monohydroxypentaacryalte, dipentaerythritol haxaacrylate, 1,4-butylene glycol diacrylate, 1,6-hexanediol diacrylate, polyethylene glycol diacrylate and commercially available oligoester acrylate.

Other than the acrylate compounds, urethane acrylate oligomers are employable as the energy ray-polymerizable low-molecular weight compounds.

Further, oligomers having functional groups such as hydroxyl group and carboxyl group, e.g., epoxy modified acrylate, polyester acrylate, polyether acrylate and itaconic acid oligomer, are also employable.

The energy ray-polymerizable low-molecular compounds are cured by irradiation with energy rays. Examples of the energy rays include ultraviolet rays and electron rays.

Also employable as the energy ray-curing pressure-sensitive adhesive component (II') is a polymer wherein an energy ray-polymerizable low-molecular weight compound is linked as a side chain to the polymer for constituting the pressure-sensitive adhesive component (II). This polymer is, for example, a polymer wherein an energy ray-polymerizable low-molecular weight compound having C=C bond is linked to the side chain of the aforesaid acrylic polymer. Examples of such polymers are described in the specification of Japanese Patent Application No. 189717/1994.

When ultraviolet rays are used as the energy rays, the polymerization curing time and the energy ray irradiation dose can be reduced by introducing a photopolymerization initiator into the above composition. Examples of the photopolymerization initiators include benzophenone, acetophenone, benzoin, benzoin methyl ether, benzoin ethyl ether, benzoin isopropyl ether, benzoin isobutyl ether, benzoin benzoic acid, benzoin methyl benzoate, benzoin dimethyl ketal, 2,4-diethylthioxanthone, α-hydroxycyclohexyl phenyl ketone, benzyldiphenyl sulfide, tetramethylthiuram monosulfide, azobisisobutyronitrile, benzyl, dibenzyl, diacetyl and β-chloroanthraquinone.

In the energy ray-curing pressure-sensitive adhesive component (II') used in the invention, the compounding ratio between the pressure-sensitive adhesive component, the energy ray-polymerizable low-molecular weight compound and the photopolymerization initiator is appropriately determined according to the properties of those components. However, it is desirable to use the energy ray-polymerizable low-molecular weight compound in an amount of about 50 to 200 parts by weight, preferably about 80 to 150 parts by weight, and to use the photopolymerization initiator in an amount of about 0.5 to 10 parts by weight, preferably about 1 to 5 parts by weight, each based on 100 parts by weight of the pressure-sensitive adhesive component.

The second adhesive composition of the invention comprises the components (Ia) to (Ic) and the energy ray-curing pressure-sensitive adhesive component (II') as its essential components, and the compounding ratio between those components is appropriately determined. However, the onium salt for curing of epoxy resin (Ib) is used in an amount of preferably 0.01 to 20 parts by weight, particularly preferably 0.05 to 10 parts by weight, based on 100 parts by weight of the epoxy compound (Ia); the metal complex compound (Ic) is used in an amount of preferably 0.01 to 20 parts by weight, particularly preferably 0.05 to 10 parts by weight, based on 100 parts by weight of the epoxy compound (Ia); and the energy ray-curing pressure-sensitive adhesive component (II') is used in an amount of 5 to 300 parts by weight, particularly preferably 10 to 100 parts by weight, based on 100 parts by weight of the epoxy compound (Ia).

To the thermosetting/energy ray-curing pressure-sensitive adhesive composition of the invention, metallic powders having electrical conductivity, insulation fillers such as silica and flexible components for imparting toughness to the cured product can be added according to necessity, in addition to the above components (Ia) to (Ic) and (II').

The thermosetting/energy ray-curing pressure-sensitive adhesive composition of the invention can be prepared by mixing the above components in a conventional manner.

It is particularly preferable to use the second adhesive composition of the present invention in the form of so-called "adhesive sheet".

That is, the second embodiment of the adhesive sheet of the invention comprises a substrate and a pressure-sensitive adhesive layer which is provided on the substrate and made of the thermosetting/energy ray-curing pressure-sensitive adhesive composition.

Examples of the substrates employable herein are the same as those used for the aforesaid adhesive sheet of the first embodiment.

The substrate has a thickness of usually about 10 to 300 µm, preferably about 20 to 200 µm, particularly preferably about 50 to 150 µm. On the other hand, the pressure-sensitive adhesive layer has a thickness of usually about 5 to 100 µm, preferably about 10 to 75 µm, particularly preferably about 15 to 50 µm.

The adhesive sheet of the second embodiment according to the present invention can hold an adherend with sufficient adhesion strength, so that the adherend held thereon can be subjected to various processes such as cutting and abrading. Before or after the desired process, the adhesive layer is irradiated with energy rays, and then the adherend is peeled from the sheet. As a result, the pressure-sensitive adhesive layer can be allowed to remain on the surface of the adherend. Therefore, the adherend can be adhered to another article, and besides the adherend can be firmly fixed thereto by heating because the thermosetting adhesive component contained in the pressure-sensitive adhesive layer is cured under heating.

The adhesive sheet is particularly preferably used for cutting a semiconductor wafer into IC chips and adhering the chips onto a lead frame. In more detail, a semiconductor wafer is adhered to the pressure-sensitive adhesive layer of the adhesive sheet and diced to give an IC chip on the adhesive sheet. Before or after the dicing, the pressure-sensitive adhesive layer is irradiated with energy rays to cure the energy ray-curing pressure-sensitive adhesive component in the pressure-sensitive adhesive layer. Then, the IC chip is peeled from the substrate while the cured adhesive layer is allowed to remain on the surface of the IC chip. The IC chip is mounted on a lead frame through the cured adhesive layer and then heated, whereby adhesive force of the thermosetting adhesive component in the cured adhesive layer is developed to bond the IC chip and the lead frame together.

In addition to the above usage, the adhesive compositions and the adhesive sheets according to the invention can be used for adhering glasses, ceramics, metals, etc.

### EFFECT OF THE INVENTION

According to the present invention, a metal complex compound is introduced into an adhesive containing an epoxy compound and an onium salt for curing of epoxy resin, and a pressure-sensitive adhesive component,
whereby bad influences caused by ionic impurities derived from the onium salt can be reduced. The adhesive compositions of the invention are excellent also in preservation stability and handling properties. Moreover, if functional groups such as epoxy group, hydroxyl group and carboxyl group are present before and/or after the reaction of the epoxy compound or the energy ray-curing component, those groups can be crosslinked by the metal complex compound. Therefore, the shear strength given after the curing process can be improved. The adhesive compositions and the adhesive sheets according to the present invention can be suitably used for preparing electronic parts, particularly semiconductor apparatuses, which easily suffer from property deterioration caused by the ionic impurities.

### EXAMPLE

The present invention will be further described with reference to the following examples, but it should be construed that the invention is in no way limited to those examples.

In the following examples and comparative examples, the shear strength and the extracted ion quantity were evaluated in the manner described below.

### Shear strength

### Examples 1-5, Comparative Examples 1-3

To a back surface of a silicon wafer having a thickness of 350 µm and subjected to #2000 abrasion, an adhesive sheet was adhered. After irradiation with ultraviolet rays, the silicon wafer with the adhesive sheet was diced to give a silicon chip of 4 mm × 4 mm. The silicon chip having the adhesive layer on the back surface thereof was adhered to a copper plate (30 mm × 30 mm, thickness: 300 µm), and they were heated at 200 °C for 30 minutes to cure the adhesive layer. The shear strength of this sample was measured by a horizontal type load measuring machine (AIKO Engineering Co.). In this measurement, the sample was held on a hot plate at 250 °C for 1 minute, and in this state the shear strength was measured at a loading rate of 12 mm/min.

### Extracted ion

### Examples 1-5, Comparative Examples 1-3

1 g of adhesive composition cured at 200 °C for 30 minutes was immersed in 20 ml of pure water to perform extraction at 121 °C for 24 hours. Then, a concentration of extracted fluoride ion contained in the water was measured by an ion chromatoanalyzer IC5000P (manufactured by Yokogawa Denki K.K.).

Listed below are components of the adhesive compositions used in the following examples and comparative examples.
(Ia) Epoxy compound:
   Blend of 30 parts by weight of a liquid bisphenol F resin (epoxy equivalent: 165 - 175), 25 parts by weight of a solid bisphenol A resin (epoxy equivalent: 800 - 900) and 30 parts by weight of a cresol novolak epoxy resin (epoxy equivalent: 215 - 225)
(Ib) Onium salt for curing of epoxy resin:
   2-Butenyl tetramethylene sulfonium hexafluoroantimonate
(Ic) Metal complex compound:
   Trisacetylacetonatoaluminum
(II) Pressure-sensitive adhesive component:
   (Meth)acrylic ester copolymer
   Copolymer of 55 parts by weight of butyl acrylate, 10 parts by weight of methyl methacrylate, 20 parts by weight of glycidyl methacrylate and 15 parts by weight of 2-hydroxyethyl acrylate; weight-average molecular weight: 900,000; glass transition temperature: -28 °C
   (II'-1) Energy ray-polymerizable low-molecular weight compound:
      Dipentaerythritol hexaacrylate
   (II'-2) Photopolymerization initiator:
      1-Hydroxycyclohexyl phenyl ketone

Others:
API: aromatic polyisocyanate

### Examples 1-5, Comparative Examples 1-3

The components are mixed in proportions shown in Table 1 to obtain an adhesive composition. The adhesive composition was applied onto a polyethylene film having a thickness of 90 µm in such a manner that the thickness of the composition became 30 µm, and the composition was dried to obtain an adhesive sheet. The adhesive sheet was evaluated on the shear strength and the extracted ion by the methods described above. The results are set forth in Table 1.

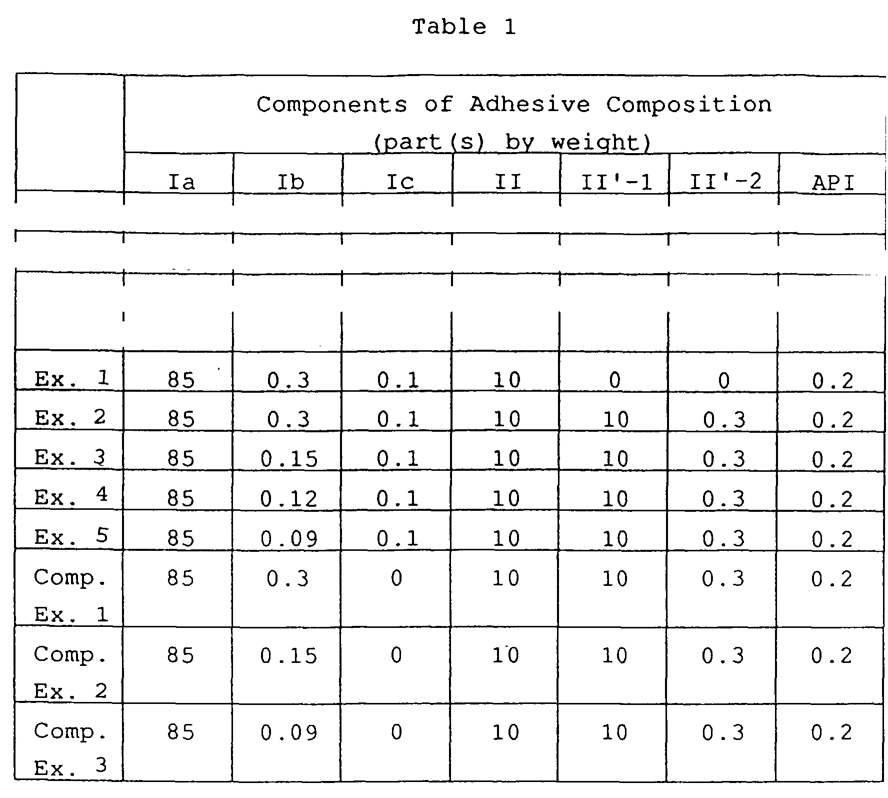

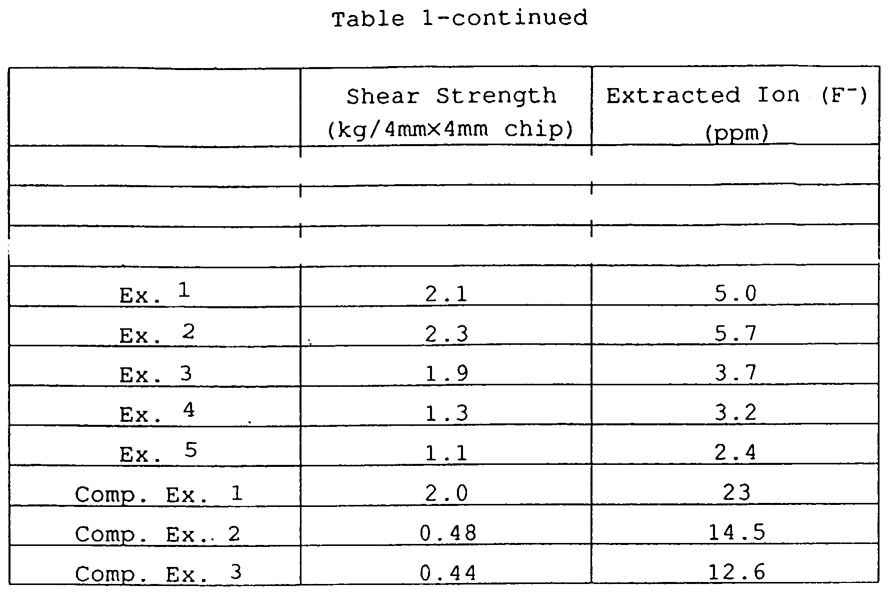

## Claims

1. A thermosetting pressure-sensitive adhesive composition comprising an epoxy compound, an onium salt for curing of epoxy resin, a metal complex compound and a pressure-sensitive adhesive component.

2. A thermosetting/energy ray-curing pressure-sensitive adhesive composition comprising a thermosetting adhesive composition as claimed in claim 1 wherein the pressure-sensitive adhesive component is an energy ray-curing pressure-sensitive adhesive component.

3. An adhesive sheet comprising a substrate and a pressure-sensitive adhesive layer which is provided on the substrate and comprises the pressure-sensitive adhesive composition as claimed in claim 1 or claim 2.

4. A thermosetting adhesive composition as claimed in any one of the preceding claims, wherein the epoxy compound is at least one member selected from bisphenol glycidyl type epoxy compounds, cresol novolak type epoxy compounds and phenol novolak type epoxy compound.

5. A thermosetting adhesive composition as claimed in any one of the preceding claims, wherein the onium salt for curing of epoxy resin is a sulfonium compound.

6. A thermosetting adhesive composition as claimed in any one of the preceding claims, wherein the metal complex compound is a complex compound wherein at least one group selected from an alkoxy group, a phenoxy group, an acyloxy group, a β-diketonato group and an o-carbonylphenolato group is bonded to an atom selected from Ti, Al and Zr.

7. A thermosetting adhesive composition as claimed in any one of the preceding claims, wherein the onium salt for curing of epoxy resin is contained in an amount of 0.01 to 20 parts by weight, and the metal complex compound is contained in an amount of 0.01 to 20 parts by weight, both based on 100 parts by weight of the epoxy compound.

## Patentansprüche

1. Heißaushärtende druckempfindliche Klebstoffzusammensetzung, die eine Epoxid-Verbindung, ein Onium-Salz zum Härten des Epoxidharzes, eine Metallkomplex-Verbindung und einen druckempfindlichen Klebstoffbestandteil aufweist.

2. Heißaushärtende/durch Energiestrahlen härtende druckempfindliche Klebstoffzusammensetzung, die eine heißaushärtende Klebstoffzusammensetzung nach Anspruch 1 aufweist, wobei der druckempfindliche Klebstoffbestandteil ein durch Energiestrahlen härtender druckempfindlicher Klebstoffbestandteil ist.

3. Klebstofflage, die ein Substrat und eine druckempfindliche Klebstoffschicht aufweist, die auf dem Substrat vorgesehen ist und die die druckempfindliche Klebstoffzusammensetzung nach einem der Ansprüche 1 oder 2 aufweist.

4. Heißaushärtende Klebstoffzusammensetzung nach einem der vorhergehenden Ansprüche, wobei die Epoxid-Verbindung mindestens eine Verbindung ist, die aus Bisphenol-Glycidyl Epoxid-Verbindungen, Kresol-Novolak Epoxid-Verbindungen und Phenol-Novolak Epoxid-Verbindungen ausgewählt ist.

5. Heißaushärtende Klebstoffzusammensetzung nach einem der vorhergehenden Ansprüche, wobei das Onium-Salz zum Härten des Epoxidharzes eine Sulfoniumverbindung ist.

6. Heißaushärtende Klebstoffzusammensetzung nach einem der vorhergehenden Ansprüche, wobei die Metallkomplexverbindung eine Komplexverbindung ist, bei der mindestens eine Gruppe, die aus einer Alkoxygruppe, einer Phenoxygruppe, einer Acyloxygruppe, einer β-Diketonatgruppe und einer o-Carbonylphenolatgruppe ausgewählt ist, an ein Atom gebunden ist, das aus Ti, Al und Zr ausgewählt ist.

7. Heißaushärtende Klebstoffzusammensetzung nach einem der vorhergehenden Ansprüche, wobei das Onium-Salz zum Härten von Epoxidharz in einer Menge von 0,01 bis 20 Gewichtsanteilen enthalten ist und die Metallkomplexverbindung in einer Menge von 0,01 bis 20 Gewichtsanteilen enthalten ist, jeweils basierend auf 100 Gewichtsanteilen der Epoxid-Verbindung.

## Revendications

1. Composition adhésive autocollante thermodurcissable comprenant un composé époxy, un sel d'onium destiné au durcissement d'une résine époxy, un composé complexe métallique et un composant adhésif autocollant.

2. Composition adhésive autocollante thermodurcissable/durcissant par rayonnement énergétique, comprenant une composition adhésive thermodurcissable selon la revendication 1, dans laquelle le composant adhésif autocollant est un composant adhésif autocollant durcissant par rayonnement énergétique.

3. Feuille adhésive comprenant un substrat et une couche adhésive autocollante qui est prévue sur le substrat et comprend la composition adhésive autocollante selon la revendication 1 ou la revendication 2.

4. Composition adhésive thermodurcissable selon l'une quelconque des revendications précédentes, dans laquelle le composé époxy est au moins un élément choisi parmi des composés époxy du type bisphénolglycidyle, des composés époxy du type crésol-novolaque et un composé époxy du type phénol-novolaque.

5. Composition adhésive thermodurcissable selon l'une quelconque des revendications précédentes, dans laquelle le sel d'onium destiné au durcissement d'une résine époxy est un composé sulfonium.

6. Composition adhésive thermodurcissable selon l'une quelconque des revendications précédentes, dans laquelle le composé complexe métallique est un composé complexe dans lequel au moins un groupe choisi parmi un groupe alcoxy, un groupe phénoxy, un groupe acyloxy, un groupe β-dicétonato et un groupe o-carbonylphénolato est lié à un atome choisi parmi Ti, Al et Zr.

7. Composition adhésive thermodurcissable selon l'une quelconque des revendications précédentes, dans laquelle le sel d'onium destiné au durcissement d'une résine époxy est présent en une quantité de 0,01 à 20 parties en poids, et le composé complexe métallique est présent en une quantité de 0,01 à 20 parties en poids, toutes deux par rapport à 100 parties en poids du composé époxy.
